(19) Europäisches Patentamt
European Patent Office
Office européen des brevets

(11) EP 1 770 595 B1

(12) **EUROPÄISCHE PATENTSCHRIFT**

(45) Veröffentlichungstag und Bekanntmachung des Hinweises auf die Patenterteilung:
**24.12.2008 Patentblatt 2008/52**

(51) Int Cl.:
***G06K 9/00*** *(2006.01)*      ***G08G 5/04*** *(2006.01)*

(21) Anmeldenummer: **06019012.1**

(22) Anmeldetag: **12.09.2006**

(54) **Verfahren zur Unterstützung von Tiefflügen zur Erkennung von Hindernissen**

Procedure to assist low-flying aircraft in obstacle detection

Procédé d'assistance d'avions volant à basse altitude pour la détection d'obstacles

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.10.2005 DE 102005047273**

(43) Veröffentlichungstag der Anmeldung:
**04.04.2007 Patentblatt 2007/14**

(73) Patentinhaber: **EADS Deutschland GmbH**
**85521 Ottobrunn (DE)**

(72) Erfinder:
• **Harder, Harald, Dr.**
**88682 Salem-Buggensegel (DE)**

• **Wegner, Matthias**
**88048 Friedrichshafen (DE)**
• **Hoyer, Michael**
**88633 Heiligenberg (DE)**

(74) Vertreter: **Meel, Thomas**
**Patentassessor**
**EADS Deutschland GmbH**
**Patentabteilung, DSLA IP1**
**88039 Friedrichshafen (DE)**

(56) Entgegenhaltungen:
**EP-A1- 0 562 941      DE-A1- 19 828 318**
**DE-C1- 19 605 218      FR-A1- 2 258 637**

**Beschreibung**

Die Erfindung betrifft ein Verfahren zur Unterstützung von Tiefflügen gemäß dem Oberbegriff des Patentanspruchs 1.

Bei tieffliegenden Fluggeräten, wie etwa Hubschraubern, stellen aufgrund des operationellen Einsatzspektrums Freileitungen und Drähte eine große Bedrohung dar. Im Gegensatz zu massiven Hindernissen - wie z.B. Berg- oder Talflanken, großen Gebäuden, Waldrändern oder dichten Baumgruppen - zeichnen sich Freileitungen und Drähte durch ihren sehr geringen visuellen Kontrast zur Umgebung aus. Dies kann dazu führen, dass solche Leitungshindernisse vom Piloten erst sehr spät erkannt werden und es zu kritischen Flugsituationen kommen kann.

Sensoren auf Laserradarbasis liefern Hindernisinformationen in Form von Entfernungsbildern, d.h. Bildmatrizen von Entfernungsmesspixeln. Das Problem besteht in der Entwicklung eines echtzeitfähigen Verfahrens zur Erkennung von Leitungen bzw. Leitungspixeln in diesen Entfernungsbildern, so dass der Pilot gezielt vor diesen Objekten gewarnt werden kann. Die Erfindung besteht in einem sehr zuverlässigen Verfahren zur Erkennung von Leitungs- und Drahtpixeln, bei dem es nicht notwendig ist, die Leitung oder den Draht als Gesamtobjekt zu erkennen. Daher ist das Verfahren äußerst rechenzeiteffizient.

Aus DE 100 55 572 C2 sind Verfahren zur Erkennung von Leitungen mittels Hough-Transformationen bekannt. Diese Verfahren zielen darauf ab, die Leitung als Gesamtobjekt zu erkennen und sind entsprechend aufwendig und rechenzeitintensiv. Die Leistungsfähigkeit gebräuchlicher Prozessoren ist zu gering, um die Berechnungen dieser Verfahren in Echtzeit durchzuführen.

Andere Verfahren erkennen Leitungspixel allein durch das Suchen von sprunghaften Änderungen des Entfernungswertes eines Pixels gegenüber seinen Nachbarn innerhalb der Spalte im Entfernungsbild. Ein solches Verfahren ist aus DE 198 28 318 C2 bekannt. Da Leitungen auch mit Blick gegen den Himmel - wo es keine gültigen Entfernungsmesswerte gibt - erkannt werden müssen, muss ein Pixel auch dann als Leitungspixel klassifiziert werden, wenn es in der Spalte von Nachbarpixeln mit ungültigen Entfernungswerten eingerahmt wird. Ungültige Messpixel entstehen jedoch nicht nur dann, wenn der Sensor gegen den Himmel blickt, sondern sie treten auch sporadisch, durch Sonneneinstrahlung und besonders häufig durch Reflexionen an glatten Oberflächen auf, wie z.B. bei Gewässern, asphaltierte Straßen und Plätzen, Start- oder Landebahnen bzw. Hubschrauberlandeplätzen. Diese ungültigen Messpixel führen beim Verfahren nach DE 198 28 318 C2 zu fehlerhaften Interpretationen von Messpixeln als Leitungspixel, deren Häufung insbesondere im Bereich von Start- und Landebahn oder bei Gewässern die Zuverlässigkeit diese Verfahrens erheblich einschränkt. Dies hat negative Auswirkungen auf die operationelle Einsatzfähigkeit in einem Hinderniswarnsystem für tieffliegende Fluggeräte.

Aufgabe der Erfindung ist es, ein gattungsgemäßes Verfahren zur Unterstützung von Tiefflügen derart weiterzubilden, dass drahtähnliche Hindernisse auch bei starken Umgebungseinflüssen, z.B Clutter oder beim Blick gegen den Himmel zuverlässig erkannt werden.

Diese Aufgabe wird mit den Merkmalen des Patentanspruchs 1 gelöst. Vorteilhafte Ausführungen des erfindungsgemäßen Verfahrens sind Gegenstand von Unteransprüchen.

Erfindungsgemäß umfasst das Verfahren folgende Verfahrensschritte:

- Errechnen der Höhenwerte $h(i, j)$ der einzelnen Pixel $P(i, j)$ in einem geodätischen Koordinatensystem unter Verwendung der Flugzustandsdaten des Fluggeräts;
- Auswerten der Pixelmenge, wobei für jedes Pixel $P(i, j)$ der Entfernungswert mit einem vorgebbaren Schwellwert oder Schwellwertebereich verglichen wird und das Pixel $P(i, j)$ einen ungültigen Status erhält, wenn der entsprechende Entfernungswert oberhalb des Schwellwertes oder außerhalb des Schwellwertebereichs liegt;
- Festlegung in jeder Pixelspalte $j$ für jedes Pixel $P(i, j)$ eine Vergleichshöhe $h_{vgl}$ mit $h_{vgl}=Min(h_{oben}, h_{unten})$, wobei hoben der Höhenwert desjenigen Pixels $P(i', j)$ mit gültigem Status in der jeweiligen Pixelspalte $j$ oberhalb des Messpixels $P(i, j)$ ist, welcher dem Messpixel $P(i, j)$ am nächsten ist und $h_{unten}$ der Höhenwert desjenigen Pixels $P(i'', j)$ mit gültigem Status in der jeweiligen Pixelspalte $j$ unterhalb des Messpixels $P(i, j)$ ist, welcher dem Messpixel $P(i, j)$ am nächsten ist;
- Auswertung der bildähnlichen Darstellung, wobei in jeder Pixelspalte $j$ der bildähnlichen Darstellung von oben nach unten oder umgekehrt die Entfernungswerte von in Vertikalrichtung benachbarten Pixel $P(i, j)$ verglichen werden und das entsprechende Pixel $P(i, j)$ als Bildpunkt hervorgehoben wird, wenn mindestens einer folgenden Fälle a) bis c) vorliegt:

  a. die Bedingung $(Rg_{i-1,j} - Rg_{i,j}) > dRg_{min}$ und $(Rg_{i+1,j} - Rg_{i,j}) > dRg_{min}$ ist erfüllt,

  b. die Bedingung ist erfüllt, dass Pixel $P(i-1,j)$ ungültig ist und $(Rg_{i+1,j} - Rg_{i,j}) > dRg_{min}$,

  c. die Bedingung ist erfüllt, dass die benachbarten Pixel $P(i-1, j)$ oberhalb des Messpixels $P(i, j)$ und die benachbarten Pixel P(i+1, j) unterhalb des Messpixels P(i, j) einen ungültigen Status aufweisen und der Höhenwert h(i, j) des Messpixels P(i, j) größer als die Vergleichshöhe $h_{vgl}$ ist,

wobei der Wert $dRg_{min}$ von der Auflösung des verwendeten Sensor abhängt, $Rg_{i,j}$ der Entfernungswert zum Messpixel P(i, j) ist und $Rg_{i-1,\,j}$ und $Rg_{i+1,\,j}$ die Entfernungswerte der direkt benachbarten Pixel P(i-1, j) und P(i+1, j) in der Spalte j des Entfernungsbildes sind.

Die Erfindung sowie weitere vorteilhafte Ausführungen der Erfindung werden im Weiteren anhand von Zeichnung näher erläutert. Es zeigen:

Fig. 1    den schematischen Aufbau eines Entfernungsbildes,
Fig. 2    eine erste schematische Darstellung zur Erkennung eines Leitungspixels,
Fig. 3    eine zweite schematische Darstellung zur Erkennung eines Leitungspixels,
Fig. 4    eine dritte schematische Darstellung zur Erkennung eines Leitungspixels,

Vorteilhaft werden im Entfernungsbild bezüglich eines Messpixels nicht nur direkt benachbarte Einzelpixel sondern auch Paare und Tripel direkt benachbarter Pixel betrachtet, d.h. die Bedingungen a) - c) werden mehrmals untersucht, wobei als Vergleichspixel nicht nur die nächsten Nachbarn, sondern auch die übernächsten und überübernächsten Nachbarn betrachtet werden. Diese Vorgehensweise kann zweckmäßig dann eingesetzt werden, wenn bei entsprechend hoher Zeilenauflösung ein Leitungshindernis im Entfernungsbild durch zwei oder mehrere benachbarte Spaltenpixel dargestellt wird. Durch die Höhenbedingung im Fall c) wird die gewünschte Zuverlässigkeit des Verfahrens im Hinblick auf die Fehlklassifikation von Messpixeln erreicht.

Das erfindungsgemäße Verfahren ist ein zuverlässiges und dennoch rechenzeiteffizientes Verfahren zur Erkennung von Leitungs- und Drahtpixeln aus einem Entfernungsbild, das neben dem Entfernungswert der Messpixel auch die Höhe der Pixel in einem geodätischen Koordinatensystem verwendet.

Für das erfindungsgemäße Verfahren ist zunächst eine Erfassung von Rohdaten nach bekannten Methoden erforderlich. Dabei müssen für die erfindungsgemäße Drahterkennung als Rohdaten entweder richtungsgebundene Entfernungswerte vorliegen, die ein Abbild der das Fluggerät umgebenden Topographie darstellen, oder es muß bereits ein vorbearbeitetes digitales Bild vorliegen, in dem jedem Bildpunkt (Pixel) eindeutig eine vom Sensor detektierte Entfernung zugeordnet werden kann. Die Rohdaten können z. B. durch einen Radar- oder Lasersensor gewonnen werden. Die relative Lage jedes Datenpunktes zum Ort des Sensors zur Messzeit t muß bekannt sein, damit aus den Gesamtdaten eine bildähnliche Darstellung berechnet werden kann. Diese Darstellung gibt den "Blick" des Sensors auf die Umgebung wieder, wobei für jeden Bildpunkt die Entfernung zum detektierenden Sensor bekannt ist.

Bei der Erkennung drahtähnlicher Gegenstände in Echtzeit wird das vorbearbeitete Sensorbild ausgewertet. Dazu werden in jeder Pixelspalte von oben nach unten (oder umgekehrt) die Entfernungswerte von in Vertikalrichtung benachbarten Bildpunkten verglichen. Für den Fall, dass der Entfernungswert eines Bildpunktes deutlich kleiner ist als der seiner Nachbarn bzw. der Bildpunkt von ungültigen Bildpunkten eingerahmt wird, d. h. dass dieser Entfernungswert "hervorsticht", wird der entsprechende Bildpunkt in einer Kontrast- bzw. Signalfarbe eingefärbt.

Das Verfahren setzt somit auf einer Enfernungsbildmatrix auf, die von einem aktiven Sensor an einem Fluggerät aufgenommen wurde, wobei der Entfernungsbildsensor nach bekannten Verfahren die in Flugrichtung liegende Umgebung des Fluggerätes abtastet. Unter Verwendung der Navigations- bzw. Flugzustandsdaten des Fluggerätes wird in einer Vorverarbeitung die Position der Messpixel in einem geodätischen Koordinatensystem berechnet. Durch bekannte Filterverfahren [Sonnenfilter, DropIn-Filter] können in einem ersten Verfahrensschritt ungültige Messpixel aufgrund von direkter oder indirekter Sonneneinstrahlung (Clutter) sowie aufgrund von Messfehlern des Sensors (DropIn-Pixel) identifiziert und herausgefiltert werden. Ungültige Messpixel können auch durch Reflexionen an glatten Oberflächen, wie z.B. bei Gewässern, asphaltierten Straßen und Plätzen, Start- oder Landebahnen bzw. Hubschrauberlandeplätzen entstehen.

Die Identifizierung von Leitungspixeln setzt somit auf einem Entfernungsbild auf, bei dem zu jedem Messpixel die folgenden Informationen verfügbar sind:

-    Entfernung vom Fluggerät
-    Höhe in einem geodätischen Koordinatensystem
-    Status der Gültigkeit

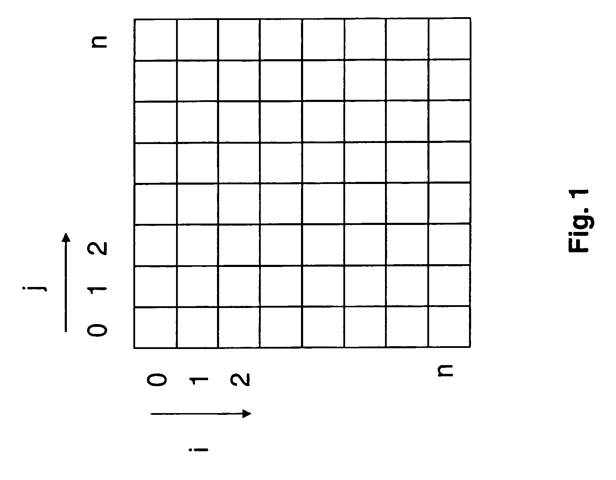

Das Verfahren untersucht die Messpixel innerhalb einer Spalte j im Sensorbild (Fig.1). Es wird die sprunghafte Verkleinerung des Entfernungswertes eines Pixels gegenüber seinen nächsten Nachbarpixeln als Kriterium für ein Leitungspixel verwendet. Eine sprunghafte Verkleinerung des Entfernungswertes kann aber auch dann vorliegen, wenn ein Messpixel von zwei ungültigen Messpixeln eingerahmt ist. In diesem Fall kann für ein ungültiges Messpixel ein unendlicher Entfernungswert angenommen werden.

Zunächst werden für ein Messpixel (i,j), in Zeile i und Spalte j des Sensorbildes die folgenden Größen definiert:

- $h_{oben}$ ist die Höhe desjenigen gültigen Pixels (i',j) in der Spalte j oberhalb von Pixel (i,j), d.h. i' < i , das dem Pixel (i, j) am nächsten liegt.
- $h_{unten}$ ist die Höhe desjenigen gültigen Pixels (i',j) in der Spalte j unterhalb von Pixel (i,j), d.h. i' > i , das dem Pixel (i,j) am nächsten liegt.

Als Vergleichshöhe $h_{vgl}$ = Min($h_{oben}$, $h_{unten}$) wird das Minimum der beiden Höhen definiert.

Ein Pixel (i,j) wird genau dann als Leitungspixel klassifiziert, wenn mindestens einer der folgenden Fälle a) bis c) vorliegt:

a) Entfernungswerte der beiden Nachbarpixel P(i-1, j) und P(i+1, j) der Spalte j sind größer als der Entfernungswert des Messpixels P(i, j):

$$(Rg_{i-1,j} - Rg_{i,j}) > dRg_{min} \text{ und } (Rg_{i+1,j} - Rg_{i,j}) > dRg_{min}$$

b) der Entfernungswert des unteren Nachbarpixels P(i+1, j) in der Spalte j ist größer als der des Messpixels P(i, j) und der obere Nachbarpixel P(i-1, j) ist ungültig:

$$\text{Pixel } P(i-1,j) \text{ ungültig und } (Rg_{i+1,j} - Rg_{i,j}) > dRg_{min},$$

c) beide Nachbarpixel P(i-1, j) und P(i+1, j) sind ungültig und der Messpixel liegt über der Vergleichshöhe $h_{vgl}$:

$$P(i-1, j) \text{ ungültig und } P(i+1, j) \text{ ungültig und } h(i, j) > h_{vgl}$$

Der Wert $dRg_{min}$ ist ein vorgebbarer Parameter, der vom Sensor und damit auch von der Winkelauflösung des Entfernungsbildes abhängig ist. Zweckmäßig liegt der Wert $dRg_{min}$ bei ≥5% vom Entfernungswert des jeweils zu untersuchenden Messpixels.

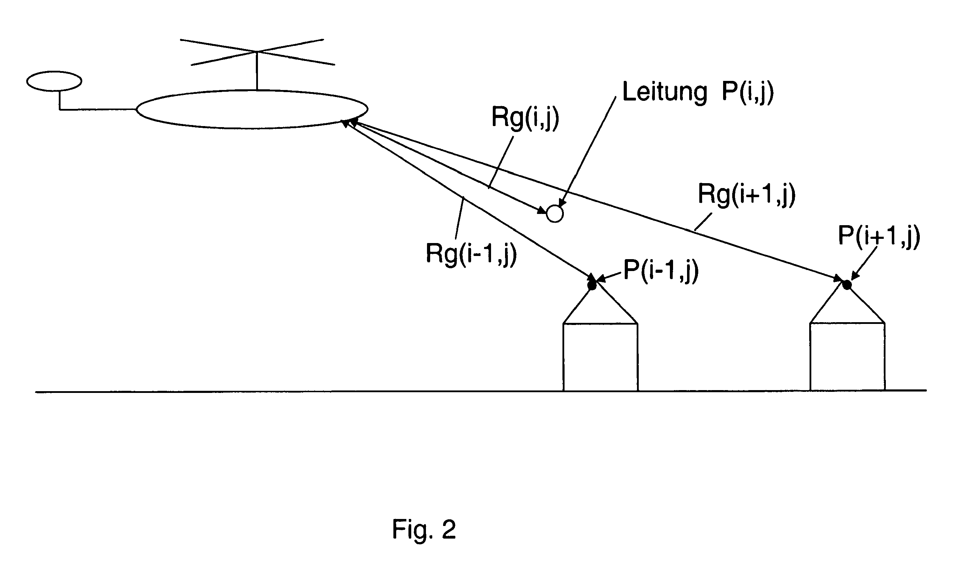

Fig. 2 zeigt dabei eine erste schematische Darstellung zur Erkennung eines Leitungspixels gemäß dem Fall a). Der jeweilige Entfernungswert Rg(i-1,j) bzw. Rg(i+1,j) der Nachbarpixel P(i-1, j) bzw. P(i+1, j) in einem nicht dargestellten Sensorbild ist jeweils größer als die Summe aus dem Entfernungswert Rg(i,j) des Messpixels P(i, j) und einem vorgebbare Parameter $dRg_{min}$. In diesem Fall erkennt der Sensor ein Leitungspixel z.B. vor einer Häuserfront oder über einem freien Feld.

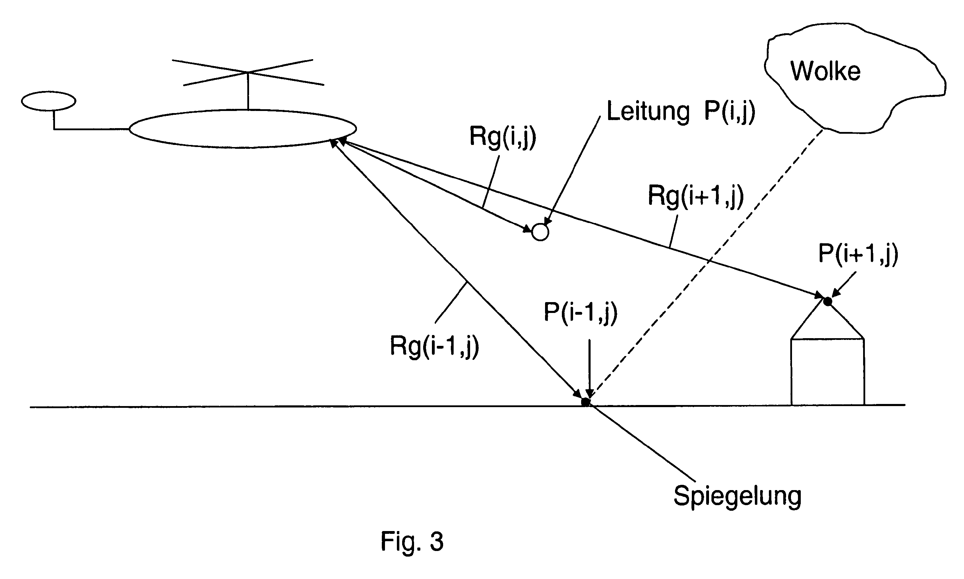

Fig. 3 zeigt eine zweite schematische Darstellung zur Erkennung eines Leitungspixels gemäß dem Fall b). Das untere Nachbarpixel P(i-1, j) ist ungültig, da diesem Pixel kein eindeutiger Entfernungswert Rg(i-1,j) zugeordnet werden kann, und der Entfernungswert des oberen Nachbarpixel P(i+1,j) größer als die Summe aus dem Entfernungswert des Messpixels P(i, j) und einem vorgebbaren Parameter $dRg_{min}$. Das ungültige Messpixel hat hierbei einen unendlichen Entfernungswert. In diesem Fall erkennt der Sensor eine Leitung über einem Rollfeld Luftspiegelungen.

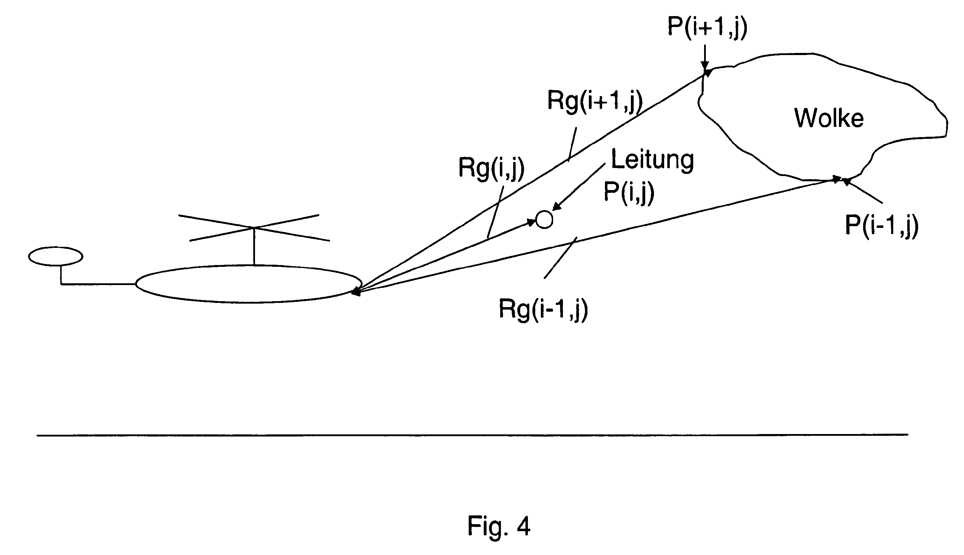

In Fig. 4 ist eine dritte schematische Darstellung zur Erkennung eines Leitungspixels gemäß dem Fall c) gezeigt. Das Messpixel P(i,j) ist von zwei ungültigen Messpixeln P(i+1,j) und P(i-1,j) eingerahmt. Die Messpixel P(i+1,j) und P(i-1,j) sind als ungültig klassifiziert worden, da den beiden Messpixeln keine definierte Entfernung Rg(i+1,j) bzw. Rg(i-1,j) zugeordnet werden kann. Die ungültigen Messpixel haben hierbei jeweils einen unendlichen Entfernungswert. In diesem Fall erkennt der Sensor eine Leitung beim Blick gegen den Himmel.

Das erfindungsgemäße Verfahren ist in der Lage sehr zuverlässig Freileitungen und Drähte in Entfernungsbildern zu erkennen. Es ist darüber hinaus einfach und daher ausgesprochen rechenzeiteffizient. Insbesondere durch die Höhenbedingung im Fall c) werden Fehlklassifikationen aufgrund ungültiger Messpixel drastisch reduziert. Da sich ungültige Messpixel durch Reflexionen gerade im Bereich von Start- und Landebahnen, Hubschrauberlandeplätzen oder bei Gewässern häufen, führt dies in einem entfernungsbildbasierten Hinderniswarnsystem für tieffliegende Fluggeräte zu einer erheblichen Verbesserung seiner Zuverlässigkeit, einer signifikante Reduktion der Fehlalarmrate und damit zur Erhöhung seiner operationellen Einsatzfähigkeit und Brauchbarkeit.

**Patentansprüche**

1. Verfahren zur Unterstützung von Tiefflügen, bei welchem eine Hinderniswarnung für den Piloten erfolgt, wobei Informationen über die Topographie des umgebenden Geländes durch zumindest einen am Fluggerät befindlichen Sensor erfasst werden, wobei die Informationen Rohdaten darstellen und wobei eine bildähnliche Darstellung aus den Gesamt-Rohdaten errechnet wird, wobei die bildähnliche Darstellung aus einer Pixelmenge mit Pixeln $P(i, j)$ in Spalten $j$ und Zeilen $i$ besteht,
**dadurch gekennzeichnet, dass**
das Verfahren folgende Verfahrensschritte umfassend:

   - Errechnen der Höhenwerte $h(i, j)$ der einzelnen Pixel $P(i, j)$ in einem geodätischen Koordinatensystem unter Verwendung der Flugzustandsdaten des Fluggeräts;
   - Auswerten der Pixelmenge, wobei für jedes Pixel $P(i, j)$ der Entfernungswert mit einem vorgebbaren Schwellwert oder Schwellwertebereich verglichen wird und der Pixel $P(i, j)$ einen ungültigen Status erhält, wenn der entsprechende Entfernungswert oberhalb des Schwellwertes oder außerhalb des Schwellwertebereichs liegt;
   - Festlegung in jeder Pixelspalte $j$ für jedes Pixel $P(i, j)$ eine Vergleichshöhe $h_{vgl}$ mit $h_{vgl}=Min(h_{oben}, h_{unten})$, wobei hoben der Höhenwert desjenigen Pixels $P(i',j)$ mit gültigem Status in der jeweiligen Pixelspalte $j$ oberhalb des Messpixels $P(i, j)$ ist, welcher dem Messpixel $P(i, j)$ am nächsten ist und $h_{unten}$ der Höhenwert desjenigen Pixels $P(i'', j)$ mit gültigem Status in der jeweiligen Pixelspalte $j$ unterhalb des Messpixels $P(i, j)$ ist, welcher dem Messpixel $P(i, j)$ am nächsten ist;
   - Auswertung der bildähnlichen Darstellung, wobei in jeder Pixelspalte $j$ der bildähnlichen Darstellung von oben nach unten oder umgekehrt die Entfernungswerte von innerhalb einer Spalte benachbarter Pixel $P(i, j)$ verglichen werden und das entsprechende Pixel $P(i, j)$ als Bildpunkt hervorgehoben wird, wenn mindestens einer der folgenden Fälle a) bis c) vorliegt:

      a. die Bedingung $(Rg_{i-1,j} - Rg_{i,j}) > dRg_{min}$ und $(Rg_{i+1,j}- Rg_{i,j}) > dRg_{min}$ ist erfüllt,
      b. die Bedingung ist erfüllt, dass Pixel $P(i-1,j)$ ungültig ist und $(Rg_{i+1,j} - Rg_{i,j}) > dRg_{min}$,
      c. die Bedingung ist erfüllt, dass die benachbarten Pixel $P(i-1, j)$ oberhalb des Messpixels $P(i, j)$ und die benachbarten Pixel $P(i+1, j)$ unterhalb des Messpixels $P(i, j)$ einen ungültigen Status aufweisen und der Höhenwert $h(i, j)$ des Messpixels $P(i, j)$ größer als die Vergleichshöhe $h_{vgl}$ ist,

   wobei der Wert $dRg_{min}$ von der Auflösung des verwendeten Sensor abhängt, $Rg_{i,j}$ der Entfernungswert zum Messpixel $P(i, j)$ ist und $Rg_{i-1,j}$ und $Rg_{i+1,j}$ die Entfernungswerte der direkt benachbarten Pixel $P(i-1, j)$ und $P(i+1,j)$ in der Spalte $j$ des Entfernungsbildes sind.

2. Verfahren nach Anspruch 1, wobei im Entfernungsbild bezüglich eines Messpixels nicht nur direkt benachbarte Einzelpixel sondern auch Paare und Tripel direkt benachbarter Pixel betrachtet werden, d.h. die Bedingungen a) - c) werden mehrmals untersucht, wobei als Vergleichspixel nicht nur die nächsten Nachbarn, sondern auch die übernächsten und überübernächsten Nachbarn betrachtet werden.

3. Verfahren nach Anspruch 1 oder 2, wobei das Hervorheben des Bildpunktes durch Einfärben des entsprechenden Bildpunktes in einer Kontrast- oder Signalfarbe erfolgt.

4. Verfahren nach einem der vorangehenden Ansprüche, wobei die Rohdaten richtungsgebundene Entfernungswerte sind, die ein Abbild der das Fluggerät umgebende Topographie sind.

5. Verfahren nach einem der vorangehenden Ansprüche, wobei das Berechnen einer bildähnlichen Darstellung unter Verwendung der relativen Lage jedes Rohdatenpunktes zum Ort des Sensors aus den Gesamt-Rohdaten erfolgt.

**Claims**

1. Method for assistance of low flying, in which an obstruction warning is provided for the pilot, with information relating to the topography of surrounding terrain being recorded by at least one sensor which is located on the aircraft, with the information representing raw data, and with a display similar to an image being calculated from all of the raw data, with the display which is similar to an image comprising a pixel set with pixels $P(i, j)$ in columns $j$ and rows $i$,
**characterized in that**
the method comprises the following method steps:

- calculation of the height values h(i, j) of the individual pixels P(i, j) in a geodetic coordinate system using flight state data of the aircraft;
- evaluation of the pixel set, with the range value for each pixel P(i, j) being compared with a predeterminable threshold value or threshold value range, and with the pixel P(i, j) being given an invalid status if the corresponding range value is above the threshold value or outside the threshold value range;
- definition in each pixel column j for each pixel P(i,j) of a comparative height $h_{vgl}$ where $h_{vgl}$ Min ($h_{top}$, $h_{bottom}$), with $h_{top}$ being the height value of that pixel P(i', j) with a valid status in the respective pixel column j above the measurement pixel P(i, j) which is closest to the measurement pixel P(i, j) and $h_{bottom}$ being the height value of that pixel P(i'',j) with a valid status in the respective pixel column j below the measurement pixel P(i, j) which is closest to the measurement pixel P(i, j);
- evaluation of the display which is similar to an image, with the range values of pixels P(i, j) which are adjacent within a column being compared in each pixel column j of the display which is similar to an image, from top to bottom or vice versa, and with the corresponding pixel P(i, j) being emphasized as an image point when at least one of the following situations a) to c) occurs:

a. the condition ($Rg_{i-1,j}$ - $Rg_{i,j}$) > $dRg_{min}$ and ($Rg_{i+1,j}$ - $Rg_{i,j}$) > $dRg_{min}$ is satisfied,
b. the condition is satisfied that pixel P($_{i-1,j}$) is invalid and ($Rg_{i+1,j}$ - $Rg_{i,j}$) $dRg_{min}$,
c. the condition is satisfied that the adjacent pixels P(i-1,j) above the measurement pixel P(i, j) and the adjacent pixels P(i+1, j) below the measurement pixel P(i, j) have an invalid status and the height value h (i, j) of the measurement pixel P(i, j) is greater than the comparison height $h_{vgl}$,

with the value $dRg_{min}$ depending on the resolution of the sensor that is used, $Rg_{i,j}$ being the range value relating to the measurement pixel P(i, j) and $Rg_{i-1,j}$ and $Rg_{i+1,j}$ being the range values of the directly adjacent pixels P (i-1, j) and P(i+1, j) in the column j of the range image.

2. Method according to Claim 1, in which not only directly adjacent individual pixels but also pairs or triples of directly adjacent pixels are considered in the range image with respect to a measurement pixel, that is to say the conditions a) - c) are examined a plurality of times, in which case not only the closest neighbours but also the next but one and next but two neighbours are considered as comparison pixels.

3. Method according to Claim 1 or 2, in which the emphasis of the image point is provided by colouring the appropriate image point using a contrast or signal colour.

4. Method according to one of the preceding claims, in which the raw data is direction-linked range values which are an image of the topography surrounding the aircraft.

5. Method according to one of the preceding claims, in which a display which is similar to an image is calculated from all of the raw data, using the relative position of each raw data point with respect to the location of the sensor.

**Revendications**

1. Procédé d'assistance pour vol à très basse altitude avec lequel le pilote reçoit une alerte d'obstacle, des informations sur la topographie du terrain environnant étant détectées par au moins un capteur qui se trouve sur l'engin volant, les informations représentant des données brutes et une représentation similaire à une image étant calculée à partir de l'ensemble des données brutes, la représentation similaire à une image étant constituée d'un certain nombre de pixels avec des pixels P(i, j) disposés en colonnes j et en lignes i, **caractérisé en ce que** le procédé comprend les étapes suivantes:

- Calcul des valeurs de l'altitude h(i, j) de chacun des pixels P(i, j) dans un système de coordonnées géodésique en utilisant les données de situation de vol de l'engin volant ;
- Interprétation du volume de pixels, pour chaque pixel P(i, j) la valeur de l'éloignement étant comparée avec une valeur de seuil ou une plage de valeurs de seuil pouvant être prédéfinie et le pixel P(i, j) obtenant un statut invalide lorsque la valeur de l'éloignement correspondante est supérieure à la valeur de seuil ou se trouve en-dehors de la plage de valeurs de seuil ;
- Détermination dans chaque colonne de pixels j pour chaque pixel P(i, j) d'une hauteur de comparaison $h_{vgl}$, avec $h_{vgl}$ = Min ($h_{en\_haut}$, $h_{en\_bas}$), $h_{en\_haut}$ désignant la valeur de la hauteur du pixel P(i', j) ayant le statut valide dans la colonne de pixels j correspondante au-dessus du pixel de mesure P(i, j) qui est le plus proche du pixel de mesure P(i, j) et $h_{en\_bas}$ désignant la valeur de la hauteur du pixel P(i'',j) ayant le statut valide dans la colonne de pixels j correspondante au-dessous du pixel de mesure P(i, j) qui est le plus proche du pixel de mesure P(i, j);
- Interprétation de la représentation similaire à une image, les valeurs de l'éloignement des pixels P(i, j) voisins au sein d'une colonne étant comparées dans chaque colonne de pixels j de la représentation similaire à une image du haut vers le bas ou inversement et le pixel P(i, j) correspondant est mis en valeur en tant que point d'image si au moins l'un des cas a) à c) suivants est vérifié:

a. la condition $(Rg_{i-1,j}-Rg_{i,j}) > dRg_{min}$ et $(Rg_{i+1,j}-Rg_{i,j}) > dRg_{min}$ est satisfaite,
b. la condition selon laquelle le pixel P(i-1,j) est invalide et $(Rg_{i+1,j} -Rg_{i,j}) > dRg_{min}$ est satisfaite,
c. la condition selon laquelle les pixels voisins P(i-1, j) au-dessus du pixel de mesure P(i, j) et les pixels voisins P(i+1, j) au-dessous du pixel de mesure P(i, j) présentent un statut invalide est satisfaite et la valeur de la hauteur h(i, j) du pixel de mesure P(i, j) est supérieure à la hauteur de comparaison $h_{vgl}$,

la valeur $dRg_{min}$ étant dépendante de la résolution du capteur utilisé, $Rg_{i,j}$ étant la valeur de l'éloignement par rapport au pixel de mesure P(i, j) et $Rg_{i-1,j}$ et $Rg_{i+1,j}$ étant les valeurs d'éloignement des pixels directement voisins P(i-1,j) et P(i+1,j) dans la colonne j de l'image éloignée.

**2.** Procédé selon la revendication 1, non seulement les pixels individuels directement voisins, mais également les paires et les triplets de pixels directement voisins étant pris en considération dans l'image éloignée pour un pixel de mesure, ce qui veut dire que les conditions a) - c) sont analysées plusieurs fois, les pixels de comparaison pris en compte n'étant pas seulement le voisin immédiat, mais également les voisins suivants et les voisins après.

**3.** Procédé selon la revendication 1 ou 2, la mise en valeur du point d'image s'effectuant par une coloration du point d'image correspondant dans une couleur contrastée ou de signalisation.

**4.** Procédé selon l'une des revendications précédentes, les données brutes étant des valeurs d'éloignement liées à la direction qui sont une représentation de la topographie qui entoure l'engin volant.

**5.** Procédé selon l'une des revendications précédentes, le calcul d'une représentation similaire à une image s'effectuant en utilisant la position relative de chaque point de données brutes par rapport à l'emplacement du capteur parmi l'ensemble des données brutes.

Fig. 1

Fig. 2

Fig. 3

Fig. 4

EP 1 770 595 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10055572 C2

- DE 19828318 C2